Europäisches Patentamt

European Patent Office

Office européen des brevets

(19)

(11) Veröffentlichungsnummer: **0 209 946**
A2

(12) **EUROPÄISCHE PATENTANMELDUNG**

(21) Anmeldenummer: 86201237.4

(22) Anmeldetag: 15.07.86

(51) Int. Cl.⁴: **H 04 B 1/74**
**H 04 J 3/12**

(30) Priorität: 20.07.85 DE 3526020

(43) Veröffentlichungstag der Anmeldung:
28.01.87 Patentblatt 87/5

(84) Benannte Vertragsstaaten:
CH DE FR GB IT LI NL SE

(71) Anmelder: Philips Patentverwaltung GmbH
Billstrasse 80
D-2000 Hamburg 28(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
CH FR GB IT LI NL SE

(72) Erfinder: Schwarz, Dieter, Dipl.-Ing.
Effeltricher Strasse 17
D-8500 Nürnberg 10(DE)

(72) Erfinder: Kauschke, Hans-Dieter, Dipl.-Ing.
Feuchter Strasse 28d
D-8500 Nürnberg 50(DE)

(74) Vertreter: Dreykorn-Lindner, Werner et al,
Philips Patentverwaltung GmbH Postfach 10 51 49
Billstrasse 80
D-2000 Hamburg 28(DE)

(54) Einrichtungen zur Erzeugung und Erkennung der Kennzeichnung von unbeschalteten Übertragungsstrecken eines digitalen Übertragungssystems.

(57) Es ist bekannt, kein Nutzsignal führende Übertragungsstrecken eines digitalen Übertragungssystems, insbesondere bei einem PCM-Übertragungssystem, mittels spezieller Bits im Zeitmultiplexsignal zu kennzeichnen oder auf unbeschalteten Übertragungsstrecken kein Signal zu übertragen.

Zur Vermeidung des Auflösens des Rahmenaufbaus bis auf Bitebene (insbesondere um die Kennzeichnung einer unbeschalteten und ungestörten Übertragungsstrecke erkennen zu können) wird ein solches Musterdigitalsignal verwendet, welches periodisch ist, über den Zeitmultiplexrahmen verteilt ist und nicht durch Rahmensynchronwort oder Meldewort oder durch die Nutzinformation vorgetäuscht wird. Wird insbesondere als Musterdigitalsignal das invertierte Alarm-Indication-Signal AIS verwendet, so ist der zusätzliche Schaltungsaufwand durch Mitverwenden bereits vorhandener AIS-Generatoren und Erkennungsschaltungen besonders gering.

Fig. 3

EP 0 209 946 A2

Philips Patentverwaltung GmbH
N.V. Philips'Gloeilampenfabrieken   /

0209946
PHD 85336 EP
03.06.1986

Einrichtungen zur Erzeugung und Erkennung der Kennzeichnung von unbeschalteten Übertragungsstrecken eines digitalen Übertragungssystems

Die Erfindung betrifft eine Einrichtung zur Erzeugung
einer Kennzeichnung von unbeschalteten Übertragungsstrecken eines digitalen Übertragungssystems gemäß dem
Oberbegriff des Patentanspruchs 1.

Aus der DE-AS 27 53 420 ist eine Einrichtung zur Ersatzschaltung von Betriebssystemen für digitale Signale bekannt. Bei der daraus bekannten Einrichtung werden zur
Kennzeichnung von unbeschalteten Übertragungsstrecken bestimmte Bitstellen im Zeitmultiplexsignal verwendet. Solche bestimmten Bitstellen im Zeitmultiplexsignal stehen
nicht bei jedem Zeitmultiplex-Übertragungssystem zur Verfügung. Beim Rahmenaufbau eines 2 Mbit/s-Zeitmultiplexsystems werden abwechselnd am Rahmenanfang das Rahmensynchronwort und das Meldewort übertragen. Im Meldewort stehen an den Bitstellen 5 bis 8 dem Anwender freie Plätze
zur Übertragung zusätzlicher Information zur Verfügung.
Mittels dieser vier sogenannten Y-Meldebits können bis zu
16 unterschiedliche Informationen übertragen werden. In
einem 8 Mbit/s- sowie in einem 34 Mbit/s-Zeitmultiplex-
Übertragungssystem stehen solche Y-Meldebits nicht zur
Verfügung. Bei einem 140 Mbit/s-Zeitmultiplex-Übertragungssystem weist der Rahmenaufbau an den Bitstellen 15
und 16 im Block 1 zwei Y-Meldebits auf (vgl. beispielsweise TE KA DE-Technische Mitteilungen 1984, Seiten 17
bis 22, insbesondere Seite 17).

Werden zur Kennzeichnung von unbeschalteten Übertragungsstrecken die Y-Meldebits des Zeitmultiplexrahmens ver

-2-

wendet, so kann diese Art der Kennzeichnung nicht bei allen Zeitmultiplex-Übertragungssystemen zur Anwendung kommen, da solche Y-Meldebits nicht in jedem Rahmenaufbau vorhanden sind (z.B. 8 Mbit/s-, 34 Mbit/s-Zeitmultiplex-Übertragungssystem), oder es können nur eine geringe Anzahl von verschiedenen Informationen übertragen werden (Beim 140 Mbit/s-Zeitmultiplex-Übertragungssystem mit zwei Y-Meldebits nur maximal vier verschiedene Informationen).

Bei der aus der DE-AS 27 53 420 bekannten Einrichtung erfolgt die Ersatzschaltung von n-Betriebssystemen auf ein Ersatzsystem mittels in den Leitungsendeinrichtungen des Ersatzsystems angeordneten Steuergeräten. An den Stellen der Y-Meldebits setzen die Steuergeräte jeweils ein Betriebskennzeichen oder im Fehlerfalle die Adresse des umzuschaltenden Betriebssystems ein, wobei das Betriebskennzeichen in den beiden Übertragungsrichtungen des Ersatzsystems auch ein sogenanntes Alarmkennzeichen AIS (Alarm-Indication-Signal AIS) sein kann.

Das Alarmkennzeichen AIS wird in der digitalen Übertragungstechnik zur Anzeige einer Übertragungsstörung, z.B. einer Synchronisationsstörung, verwendet (vgl. EP-Bl-0 031 943) und ist ein Dauer-1-Signal. Dieses von einem beim Gegenstand der EP-Bl-0 031 943 im Leitungsendgerät angeordneten AIS-Generator erzeugte Signal dient der Unterdrückung von Folgealarm auf dem nachfolgenden Signalweg. Dadurch wird vermieden, daß bei einer Störung in der vorgeschalteten Übertragungsstrecke im gesamten nachfolgenden Streckenabschnitt Alarmsignale auftreten. Aus der EP-Bl-0 031 943 ist es bekannt, auch in den Zwischenregeneratoren solche AIS-Generatoren anzuordnen. Die Leitungsendgeräte enthalten neben den AIS-Generatoren auch Überwachungseinrichtungen, welche über eine Steuerleitung mit einer zentralen Überwachungsstelle verbunden sind.

Von der zentralen Stelle aus kann ferngesteuert der AIS-Generator über einen Umschalter mit dem Ausgang des empfangsseitigen Leitungsendgeräts verbunden werden. Weiterhin ist es aus der vorgenannten Literaturstelle (TE KA DE-Technische Mitteilungen 1984, Seiten 17 bis 22) bei einem plesiochronen Digitalsignal-Multiplexer bekannt, in der Schnittstelle E 140 Mbit/s (SSTEE) eine Überwachungsschaltung zur Erkennung von AIS in der Digitalsignalfolge vorzusehen. Auf Seite 20 der vorgenannten Literaturstelle ist ausgeführt, daß für Ersatzschaltungszwecke eine Umschaltung des Betriebseingangs B am Eingang der SSTEE auf einen zweiten Eingang E vorgenommen werden kann, wobei die Umschaltung des Umschalters manuell oder automatisch und ferngesteuert erfolgen kann. Über den Ersatzkanal in der 140-Mbit/s-Ebene wird vor der Umschaltung kein Signal übertragen.

Der Erfindung liegt die Aufgabe zugrunde, eine Einrichtung zur Erzeugung einer Kennzeichnung von unbeschalteten Übertragungsstrecken eines digitalen Übertragungssystems anzugeben, welche zur Kennzeichnung von betriebsbereiten Digitalsignal-Verbindungen beliebigen Rahmenaufbaus und beliebiger Bitfolgefrequenz einsetzbar ist.

Diese Aufgabe wird erfindungsgemäß durch eine Einrichtung gemäß den Merkmalen des Patentanspruchs 1 gelöst.

Die erfindungsgemäße Einrichtung weist den Vorteil auf, daß in bestehenden Zeitmultiplex-Übertragungssystemen ohnehin vorhandene Einrichtungen zur Erzeugung des Alarm-Indication-Signals AIS, bei der Erzeugung des Musterdigitalsignals mitverwendet werden können und somit der zusätzliche Schaltungsaufwand gering ist. Das erzeugte Musterdigitalsignal ist unabhängig vom verwendeten Rahmenaufbau einsetzbar und bringt keine Einschränkung in der Datentransparenz mit sich. Im Vergleich zur Kennzeichnung des unbeschalteten Übertragungswegs mittels Y-Meldebits gemäß der DE-AS 27 53 420 wird, durch die Verteilung des Musterdigitalsignals über den Zeitmultiplexrahmen, auch die Erkennung der Kennzeichnung eines unbeschalteten Übertragungswegs vereinfacht.

Wird gemäß Patentanspruch 2 das Musterdigitalsignal aus dem an sich bekannten AIS durch Invertieren erzeugt, so muß beispielsweise der aus der EP-B1-0 031 943 bekannte AIS-Generator lediglich durch einen Inverter ergänzt werden.

Auch bei der Einrichtung zur Erkennung der Kennzeichnung von unbeschalteten Übertragungsstrecken gemäß Patentanspruch 3 ist eine Auflösung des Musterdigitalsignals bis auf Bitebene, im Vergleich zur aus der DE-AS 27 53 420 bekannten Einrichtung, nicht erforderlich. Mittels der erfindungsgemäßen Einrichtung kann nicht nur das Musterdigitalsignal erkannt werden, sondern zusätzlich kann auch AIS erkannt werden. Der Schaltungsaufwand für die Einrichtung ist gering und beim Schaltungsaufbau können handelsübliche digitale Logikschaltungen verwendet werden.

Die Erfindung wird im folgenden anhand einer in der Zeichnung dargestellten Ausführungsform näher beschrieben und erläutert. Es zeigt:

Fig. 1 die Netzstruktur des digitalen Übertragungssystems,

Fig. 2 die erfindungsgemäße Einrichtung zur Erkennung der Kennzeichnung von unbeschalteten Übertragungsstrecken eines Zeitmultiplex-Übertragungssystem mit CMI-Code und

Fig. 3 den zeitlichen Verlauf von in der Einrichtung gemäß Fig. 2 auftretenden Signalen.

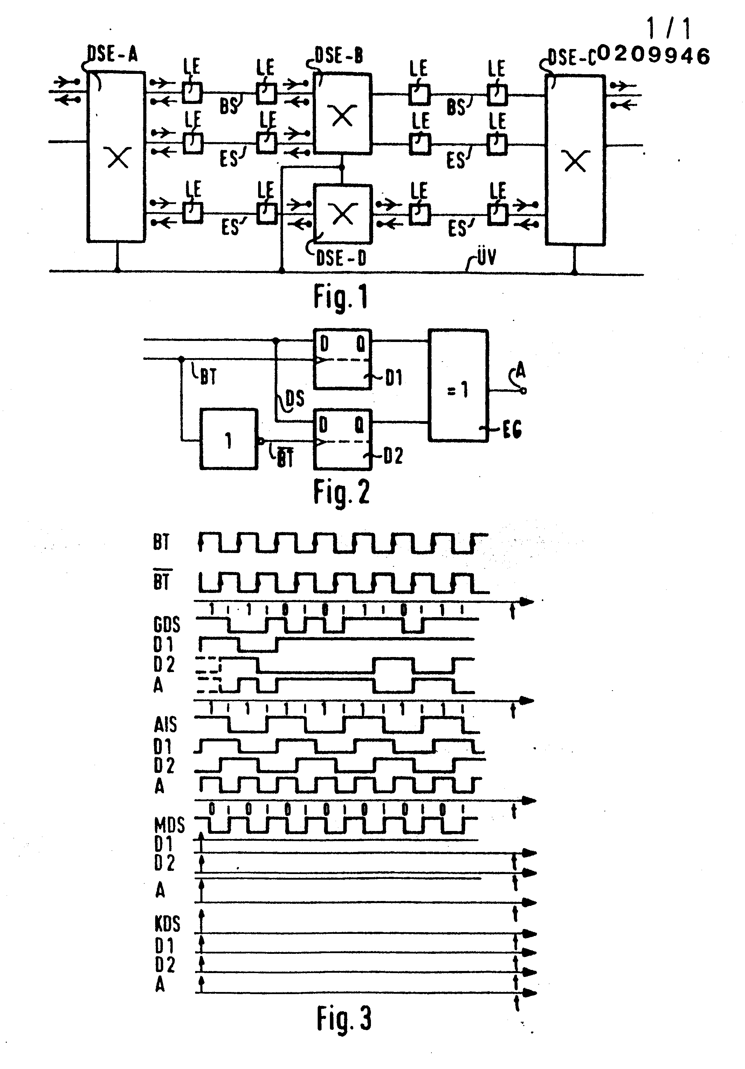

Fig. 1 zeigt einen möglichen Teilbereich des Netzes eines Zeitmultiplex-Übertragungssystems. Die Zusammfassung der Digitalsignale für ein PCM-Übertragungssystem aus Grundsystemen PCM 30 mittels Digitalsignal-Multiplexern ist in Fig. 1 nicht dargestellt. Der am Ausgang eines plesiochronen Digitalsignal-Multiplexers auftretende Informationsstrom wird jeweils den in Fig. 1 dargestellten Digitalsignal-Ersatzschaltungen DSE-A, DSE-B, DSE-D und DSE-C zugeführt. Die Kennzeichnung unbeschalteter Übertragungsstrecken wird mittels in den Digitalsignal-Ersatzschaltungen DSE-A bis DSE-D oder in den Leitungsendgeräten LE angeordneten Einrichtungen erzeugt. Diese Einrichtungen weisen neben der Einrichtung zur Erzeugung eines Musterdigitalsignals MDS auch eine Einrichtung zur Erkennung des Musterdigitalsignals MDS (vgl. Fig. 2) auf.

Sind die unbeschalteten Übertragungsstrecken für den Störungfall in Reserve gehaltene Ersatzstrecken, so kann eine Umschaltung der gestörten Betriebsstrecke auf eine Ersatzstrecke in den Digitalsignal-Ersatzschaltungen DSE-A bis DSE-D vorgenommen werden. Die Verwendung eines Musterdigitalsignals MDS, welches periodisch ist und bei einem Zeitmultiplexübertragungssystem über den Zeitmultiplexrahmen verteilt ist, bringt den Vorteil mit sich, daß keine Auflösung des Rahmens bis auf Bitebene bei der Erkennung der Kennzeichnung erforderlich ist und somit unbeschaltete Übertragungsstrecken beliebiger digitaler Übertragungssysteme auf einfache Art und Weise gekennzeichnet werden. Wird als Musterdigitalsignal MDS das invertierte (und an sich bekannte) Alarm-Indication-Signal AIS verwendet, so sind nur geringfügige Änderungen sowohl beim bekannten und handelsüblichen AIS-Generator als auch bei der AIS- Erkennungsschaltung erforderlich.

Im folgenden wird anhand einer Fallunterscheidung das

Verfahren der Ersatzstreckenschaltung näher beschrieben und erläutert. Die Umschaltung auf eine Ersatzstrecke ES zwischen den Orten A, B, C und D kann dabei manuell, halbautomatisch oder vollautomatisch erfolgen. Bei manueller Umschaltung vereinbart das Bedienungspersonal, wobei eine telefonische Verbindung zwischen den verschiedenen Orten besteht, den Zeitpunkt und auf welche Ersatzstrecke ES umgeschaltet werden soll. Bei halbautomatischer Umschaltung wird die Umschaltung mittels einer Steuereinrichtung in einer übergeordneten Zentrale über eine Überwachungsverbindung ÜV vorgenommen und durch Tastendruck ausgelöst. Bei vollautomatischer Umschaltung greift die zen- trale Steuerung auf das geführte Netzabbild zurück, wählt einen freien Ersatzweg aus und schaltet auf diese freie Ersatzstrecke ES um.

Ist die Betriebsstrecke BS in Ordnung, so wird in den entsprechenden Einrichtungen (Leitungsendgeräte LE oder Digitalsignal-Ersatzschaltungen DSE-A bis DSE-D) jeweils ein gültiges Digitalsignal GDS empfangen und gesendet. Beispielsweise wird, wenn die Betriebsstrecke BS zwischen den Orten A und B in Ordnung ist, vom Ort A ausgehend ein gültiges Digitalsignal GDS gesendet, welches im Ort B empfangen wird. Von dort aus wird ebenfalls ein gültiges Digitalsignal GDS über die Betriebsstrecke BS zurückgesandt und im Ort A empfangen. Über die in Fig. 1 dargestellte Ersatzstrecke ES zwischen den Orten A und B wird das Musterdigitalsignal MDS am Ort A (bzw. Ort B) ausgesendet und am Ort B (bzw. Ort A) empfangen. Gleiches gilt für die Ersatzsstrecken ES zwischen den Orten A und D, D und C sowie B und C. Das Empfangen des Musterdigitalsignals MDS an den Enden einer Ersatzstrecke ES (zwischen den Orten A und B, B und C, A und D, sowie D und C) ist das Kennzeichen dafür, daß die entsprechende Ersatzstrecke ES in Ordnung ist.

Ist die Betriebsstrecke BS vom Ort A zum Ort B gestört und vom Ort B zum Ort A ungestört, so wird vom Ort A ausgehend ein gültiges Digitalsignal GDS gesendet während im Ort B kein Digitalsignal KDS oder AIS empfangen wird. KDS bedeutet dabei eine Unterbrechung zwischen Leitungsendgerät LE und Digitalsignal-Ersatzschaltung DSE-B und AIS bedeutet eine Unterbrechung zwischen den Leitungsendgeräten LE. Da gemäß der Voraussetzung die Betriebsstrecke BS zwischen dem Ort B und Ort A in Ordnung ist, wird ausgehend von dem Ort B ein gültiges Digitalsignal GDS gesendet, welches im Ort A empfangen wird. Unter der Voraussetzung, daß die Ersatzstrecke ES zwischen Ort A und Ort B in Ordnung und frei ist (d.h. am Ort A und am Ort B wird das Musterdigitalsignal MDS empfangen) kann eine Umschaltung auf diese Ersatzstrecke ES vorgenommen werden. Über den Betriebsweg BS wird nach der Umschaltung vom Ort A ausgehend das Musterdigitalsignal MDS gesendet und am Ort B wird weiterhin KDS oder AIS empfangen. Vom Ort B ausgehend wird das Musterdigitalsignal MDS gesendet, welches im Ort A empfangen wird. Nach der Umschaltung auf die Ersatzstrecke ES zwischen Ort A und Ort B wird im Ort A und im Ort B das über diese Ersatzstrecke ES gesendete jeweilige gültige Digitalsignal GDS wieder empfangen.

Ist die Betriebsstrecke BS zwischen Ort A und Ort B repariert, so wird das vom Ort A über die Betriebsstrecke BS gesendete Musterdigitalsignal MDS am Ort B wieder empfangen, so daß eine Umschaltung von der Ersatzstrecke ES auf die Betriebsstrecke BS zwischen Ort A und Ort B vorgenommen werden kann. Nach der Umschaltung wird über die Betriebsstrecke BS wieder das gültige Digitalsignal GDS und über die Ersatzstrecke ES das Musterdigitalsignal MDS übertragen.

Für die folgende Betrachtung ist vorausgesetzt, daß die Betriebsstrecke BS und die Ersatzstrecke ES zwischen dem Ort A und Ort B gestört sind. Das über die Betriebsstrecke BS vom Ort A gesendete gültige Digitalsignal GDS und das über die Ersatzstrecke ES gesendete Musterdigitalsignal MDS werden im Ort B nicht empfangen, sondern am Ort B wird jeweils KDS oder AIS erkannt. Eine Umschaltung auf die Ersatzstrecke ES zwischen Ort A und Ort D sowie auf die Ersatzstrecke ES zwischen Ort D und C kann vorgenommen werden, wenn beide Ersatzstrecken ES in Ordnung sind, d.h. das Musterdigitalsignal MDS sowohl im Ort A als auch im Ort D und im Ort C empfangen wird. Nach der Umschaltung auf die Ersatzstrecken ES zwischen Ort A und Ort D bzw. Ort D und Ort C wird über die ersatzgeschalteten Betriebsstrecken BS zwischen den Orten A und B, B und C wieder das Musterdigitalsignal MDS ausgetauscht. Nach Behebung der Störung der Betriebsstrecke BS zwischen Ort A und Ort B und nachfolgender Umschaltung wird über die Ersatzstrecken ES zwischen Ort A und Ort D sowie Ort D und Ort C wieder das Musterdigitalsignal MDS übertragen und über die Betriebsstrecken BS zwischen Orten A und B bzw. B und C wird GDS gesendet und empfangen.

In Fig. 2 ist eine Ausführungsform einer Einrichtung zur Erkennung der Kennzeichnung von unbeschalteten Übertragungsstrecken dargestellt. Die Einrichtung enthält zwei D-Flip-Flop, deren Q-Ausgang mit beiden Eingängen eines EX-OR-Gatters EG verbunden sind. Das in den entsprechenden Einrichtungen, z.B. im Leitungsendgerät LE empfangene Digitalsignal DS wird jeweils dem Vorbereitungseingang D der beiden D-Flip-Flop D1 und D2 zugeführt. Dem Takteingang des ersten D-Flip-Flop D1 wird der Betriebstakt BT und dem Takteingang des zweiten D-Flip-Flop der invertierte Betriebstakt $\overline{BT}$ zugeführt. Die in Abhängigkeit des dem Vorbereitungseingang D zugeführten Digitalsignals am Ausgang A des EX-OR-Gatters EG auftretenden Signale werden im folgenden anhand Fig. 3 näher beschrieben und erläutert.

Wird dem Vorbereitungseingang D der beiden D-Flip-Flop D1 und D2 ein gültiges Digitalsignal GDS zugeführt, so tritt am Ausgang A des EX-OR-Gatters EG ein nicht periodisches Digitalsignal auf. Wird dem Vorbereitungseingang D dagegen AIS zugeführt, so tritt am Ausgang A der Betriebstakt BT auf. Wird dem Vorbereitungseingang D andererseits das Musterdigitalsignal MDS zugeführt, so nimmt das Signal am Ausgang A den 1-Kennzustand an. Wird schließlich dem Vorbereitungseingang D KDS zugeführt, so tritt am Ausgang A der 0-Kennzustand auf. In jedem dieser Fälle können in der Praxis Störimpulse eingelagert sein.

Durch die erfindungsgemäße Kennzeichnung unbeschalteter Übertragungsstrecken ist nunmehr eine Unterscheidung dahingehend möglich, ob die jeweilige Übertragungsstrecke unbeschaltet und in Ordnung ist oder ob eine Leitungsunterbrechung vorliegt.

0209946

Philips Patentverwaltung GmbH
N.V. Philips'Gloeilampenfabrieken

PHD 85336 EP
03.06.1986

Patentansprüche

1. Einrichtung zur Erzeugung einer Kennzeichnung von unbeschalteten Übertragungsstrecken eines digitalen Übertragungssystems, insbesondere bestehend aus einem Betriebssystem, bei welchem die Nutzinformation nach dem Zeitmultiplexverfahren übertragen wird, und einem Ersatzsystem, dadurch gekennzeichnet, daß die Einrichtung zur Kennzeichnung ein Musterdigitalsignal (MDS) erzeugt, welches periodisch ist, über den Zeitmultiplexrahmen verteilt ist und nicht durch Rahmensynchronwort oder Meldewort oder durch die Nutzinformation vorgetäuscht wird.

2. Einrichtung nach Anspruch 1, dadurch gekennzeichnet, daß in der Einrichtung das Musterdigitalsignal (MDS) aus dem an sich bekannten Alarm-Indication-Signal AIS durch Invertieren erzeugt wird.

3. Einrichtung zur Erkennung der Kennzeichnung von unbeschalteten Übertragungswegen nach Anspruch 2, dadurch gekennzeichnet, daß das empfangene Digitalsignal (DS) dem Vorbereitungseingang (D) zweier D-Flip-Flop (D1, D2) zugeführt wird, daß dem Takteingang des ersten D-Flip-Flop (D1) der Betriebstakt (BT) und dem Takteingang des zweiten D-Flip-Flop (D2) der invertierte Betriebstakt (BT) zugeführt wird und daß die Q-Ausgänge der beiden D-Flip-Flop (D1, D2) mit den beiden Eingängen eines EX-OR-Gatters (EG) verbunden sind, an dessen Ausgang (A) in Abhängigkeit davon, ob als Digitalsignal (DS) AIS, kein gültiges Digital-

-11-

signal (KDS) oder das Musterdigitalsignal (MDS) empfangen wird, der Betriebstakt (BT), der eine Kennzustand oder der andere Kennzustand eines binären Signals auftritt.

Fig. 1

Fig. 2

Fig. 3

PHD 85−336